# EUROPEAN PATENT APPLICATION

(11) **EP 4 838 351 A1**
(43) Date of publication of application: **11.11.2026**
(21) Application number: 25736181.6
(22) Date of filing: 02.01.2025
(51) Int. Cl.: G06F 3/14

(54) **CONTROL METHOD AND CONTROL SYSTEM FOR DISPLAY SCREEN, AND ELECTRONIC DEVICE AND STORAGE MEDIUM**

(30) Priority: 02.01.2024 CN 202410007864
(71) Applicant: Boe Technology Group Co., Ltd., Beijing 100015 (CN); Beijing BOE Technology Development Co., Ltd., Daxing District Beijing 100176 (CN)
(72) Inventor: ZHAO, Junjie, Beijing 100176 (CN); SU, Jing, Beijing 100176 (CN); CHEN, Shaobei, Beijing 100176 (CN); CHU, Xiao, Beijing 100176 (CN); FENG, Hongbo, Beijing 100176 (CN)
(74) Representative: Brötz, Helmut
(86) International application number: PCT/CN2025/070136
(87) International publication number: WO 2025/146080

(57) **Abstract**

A control method and control system for a display screen, and an electronic device and a storage medium. The control method comprises: determining a target attribute that a target application satisfies, wherein the target attribute corresponds to a preset aspect ratio; acquiring the preset aspect ratio; and on the basis of the preset aspect ratio, adjusting the aspect ratio of a display screen such that the value of the aspect ratio of the display screen reaches a target aspect ratio, wherein the aspect ratio of the display screen is the ratio of the transverse dimension of a display region of the display screen to the longitudinal dimension thereof, and the longitudinal direction intersects the transverse direction. The control method for a display screen can be used, for example, in a vehicle-mounted display screen. The method for adjusting the aspect ratio of a display screen is simple and efficient, and the aspect ratio of a display screen can quickly match the aspect ratio of an interface of a target application that a user wants to use the display screen to display.

## Description

The application claims priority to the Chinese patent application No. 202410007864.X, filed on January 02, 2024, the entire disclosure of which is incorporated herein by reference as part of the present application.

### TECHNICAL FIELD

At least one embodiment of the present disclosure relates to a control method and system for a display screen, an electronic device, and a storage medium.

### BACKGROUND

At present, the size of vehicle-mounted display screen is fixed or adjustable. For the car-mounted display screen with adjustable size, for example, the screen can be stored in the storage device by stretching or curling, and the size of the part of the display screen extending outside the storage device can be controlled as needed, so as to control the size of the part of the display screen that needs to participate in the display. For example, by controlling the display screen to extend longitudinally or transversely, the size of the display area of the display screen that participates in display can be changed to meet the different needs of users.

At present, some vehicles have only one display screen, and some vehicles have multiple displays, such as a main driving screen near the driver's seat and a sub-driving screen near the passenger seat. The main driving screen is mostly used to show the driver information related to driving control, such as road information and navigation information, and the sub-driving screen is mostly used for entertainment functions.

In addition, the sizes of vehicle-mounted display screens are diverse and different, so it is difficult for application software manufacturers to adapt and develop for most vehicle-mounted display screens to make the interface size of application software match the size of vehicle-mounted display screens.

### SUMMARY

At least one embodiment of the present disclosure provides a control method for a display screen, the control method comprises: judging a target attribute satisfied by a target application, wherein the target attribute corresponds to a preset aspect ratio; obtaining the preset aspect ratio; and adjusting an aspect ratio of the display screen according to the preset aspect ratio to make a value of the aspect ratio of the display screen reach a target aspect ratio, where the aspect ratio of the display screen is a ratio of a size in a transverse direction of a display area of the display screen to a size in a longitudinal direction, and the longitudinal direction intersects with the transverse direction.

For example, in the control method for the display screen provided by an embodiment of the present disclosure, adjusting the aspect ratio of the display screen according to the preset aspect ratio comprises: adjusting the aspect ratio of the display screen to the preset aspect ratio, and the target aspect ratio is equal to the preset aspect ratio.

For example, in the control method for the display screen provided by an embodiment of the present disclosure, judging the target attribute satisfied by the target application comprises: judging a device attribute to which the target application has been adapted, where the target attribute comprises the device attribute.

For example, in the control method for the display screen provided by an embodiment of the present disclosure, the device attribute includes a device type, and the control method for the display screen comprises: judging the device type to which the target application has been adapted, wherein the target attribute includes the device type to which the target application has been adapted; and obtaining the aspect ratio of the device type that has adapted to the target application as the preset aspect ratio.

For example, in the control method for the display screen provided by an embodiment of the present disclosure, if the target application has been adapted to a first type of device, the aspect ratio of the display screen is adjusted to a first preset aspect ratio, wherein the first preset aspect ratio is less than or equal to 1; if the target application has been adapted to a second type of device, the aspect ratio of the display screen is adjusted to a second preset aspect ratio, wherein the second preset aspect ratio is greater than 1.

For example, in the control method for the display screen provided by an embodiment of the present disclosure, the control method comprises: if the target application has been adapted to the first type of device, controlling the display screen to elongate and shorten at a first rate to adjust the aspect ratio of the display screen; if the target application has been adapted to the second type of device, controlling the display screen to elongate and shorten at a second rate different from the first rate to adjust the aspect ratio of the display screen.

For example, in the control method for the display screen provided by an embodiment of the present disclosure, an elongation and shortening direction of the display screen is the longitudinal direction, and the first speed is greater than the second speed; the elongation and shortening direction of the display screen is the transverse direction, and the first speed is smaller than the second speed.

For example, in the control method for the display screen provided by an embodiment of the present disclosure, the device attribute includes a device model, and the control method for the display screen comprises: judging the device model to which the target application has been adapted, wherein the target attribute includes the device model to which the target application has been adapted; and obtaining the aspect ratio of the device model that has adapted to the target application as the preset aspect ratio.

For example, in the control method for the display screen provided by an embodiment of the present disclosure, the device attribute further comprises a device model, and the control method for the display screen further comprises: judging the device model to which the target application has been adapted, wherein the target attribute includes the device model to which the target application has been adapted; and obtaining the aspect ratio of the device model that has adapted to the target application as the preset aspect ratio.

For example, in the control method for the display screen provided by an embodiment of the present disclosure, judging the target attribute satisfied by the target application and the obtaining the preset aspect ratio comprise: judging whether a target application belongs to an application that has been adapted to the display screen, and if so, taking a default aspect ratio of the display screen that matches with the target application as the preset aspect ratio, wherein the target attribute satisfied by the target application includes being adapted to the current display screen.

For example, in the control method for the display screen provided by an embodiment of the present disclosure, the control method for the display screen comprises: judging a type of the target application, wherein the target attribute includes a type of the target application; and obtaining an aspect ratio corresponding to a type of the target application as the preset aspect ratio.

For example, in the control method for the display screen provided by an embodiment of the present disclosure, the type of the target application includes at least one of multimedia application, short video application, navigation application, social application and shopping application.

For example, in the control method for the display screen provided by an embodiment of the present disclosure, the control method for the display screen comprises: obtaining a maximum aspect ratio and a minimum aspect ratio of the display screen, where if the type of the target application is a multimedia application, the preset aspect ratio is the maximum aspect ratio, and the control method for the display screen includes: adjusting the aspect ratio of the display screen to the maximum aspect ratio; if the type of the target application is a short video application, the preset aspect ratio is the minimum aspect ratio, and the control method for the display screen includes: adjusting the aspect ratio of the display screen to the minimum aspect ratio; if the type of the target application is a navigation application, and the preset aspect ratio is between the minimum aspect ratio and the maximum aspect ratio, the control method for the display screen comprises: enabling an adjusted aspect ratio of the display screen to be between the minimum aspect ratio and the maximum aspect ratio.

For example, in the control method for the display screen provided by an embodiment of the present disclosure, if the type of the target application is a multimedia application, the control method for the display screen comprises: judging whether the display screen is extensible in the longitudinal direction, if so, adjusting the aspect ratio of the display screen to a third preset aspect ratio corresponding to the multimedia application, wherein the third preset aspect ratio is greater than 1, if not, obtaining a maximum aspect ratio of the display screen, and adjusting the aspect ratio of the display screen to the maximum aspect ratio.

For example, in the control method for the display screen provided by an embodiment of the present disclosure, if the type of the target application is a short video application, the control method comprises: judging whether the display screen is extensible in the longitudinal direction, if so, adjusting the aspect ratio of the display screen to a fourth preset aspect ratio corresponding to the short video application, wherein the fourth preset aspect ratio is less than 1, if not, obtaining a minimum aspect ratio of the display screen, and adjusting the aspect ratio of the display screen to the minimum aspect ratio.

For example, in the control method for the display screen provided by an embodiment of the present disclosure, if the type of the target application is a multimedia application, the control method comprises: judging a playing history of the multimedia application; and obtaining an aspect ratio of the multimedia content in the playing history as the preset aspect ratio.

For example, in the control method for the display screen provided by an embodiment of the present disclosure, the control method comprises: if the type of the target application is a multimedia application, controlling the display screen to elongate and shorten at a first rate to adjust the aspect ratio of the display screen; if the application type is a short video application, controlling the display screen to elongate and shorten at a second rate to adjust the aspect ratio of the display screen.

For example, in the control method for the display screen provided by an embodiment of the present disclosure, an elongation and shortening direction of the display screen is the longitudinal direction, and the second speed is greater than the first speed; the screen elongation and shortening direction of the display screen is the transverse direction, and the second rate is smaller than the first rate.

For example, in the control method for the display screen provided by an embodiment of the present disclosure, the control method comprises: obtaining an adjustment range of the aspect ratio of the display screen, wherein a range of the aspect ratio of the display screen is a~b (a < b), a is a minimum value of the aspect ratio of the display screen, and b is a maximum value of the aspect ratio of the display screen; obtaining an aspect ratio to which the target application has adapted and comparing the ratio with the range of the aspect ratio of the display screen; if the aspect ratio to which the target application has adapted is greater than b, taking b as the preset aspect ratio; if the aspect ratio to which the target application has adapted is less than a, taking a as the preset aspect ratio, and adjusting the aspect ratio of the display screen to a; if the aspect ratio to which the target application has adapted is greater than a and less than b, the aspect ratio to which the target application has adapted is taken as the preset aspect ratio.

For example, in the control method for the display screen provided by an embodiment of the present disclosure, the control method comprises: after adjusting the aspect ratio of the display screen according to the preset aspect ratio, following steps are executed: obtaining an aspect ratio of the display image of the target application as a content aspect ratio, and further adjusting the aspect ratio of the display screen to the content aspect ratio.

For example, in the control method for the display screen provided by an embodiment of the present disclosure, the control method comprises: obtaining a maximum aspect ratio of the display screen and a minimum aspect ratio of the display screen; comparing the content aspect ratio with the maximum aspect ratio and the minimum aspect ratio respectively, if the content aspect ratio is greater than or equal to the maximum aspect ratio of the display screen, adjusting the aspect ratio of the screen to the maximum aspect ratio; if the content aspect ratio is less than or equal to the minimum aspect ratio of the display screen, adjust the aspect ratio of the screen to the minimum aspect ratio; if the content aspect ratio is less than the maximum aspect ratio of the display screen and greater than the minimum aspect ratio of the display screen, adjusting the aspect ratio of the display screen to the content aspect ratio.

For example, in the control method for the display screen provided by an embodiment of the present disclosure, a plurality of elongation and shortening length gradients are set in at least one of the transverse direction and the longitudinal direction, and the display screen is controlled to adjust the transverse size and/or the longitudinal size of the display screen along at least one of the transverse direction and the longitudinal direction according to the elongation and shortening length gradients, to adjust the aspect ratio of the display screen.

For example, in the control method for the display screen provided by an embodiment of the present disclosure, at least one of the transverse size and the longitudinal size of the display screen is adjustable so that the aspect ratio of an image displayed by the display screen is adjustable.

For example, in the control method for the display screen provided by an embodiment of the present disclosure, a plurality of sub-display screens are spliced with each other to constitute the display screen, and the sub-display screens are respectively configured to display a corresponding one of the target applications; the control method comprises following steps: judging whether the target applications displayed by the plurality of sub-display screens are associated with each other, if the target applications displayed by the sub-display screens are associated with each other, the transverse size and/or longitudinal size of the sub-display screens are synchronously adjusted respectively, to enable the aspect ratio of the display screens spliced by the sub-display screens to be the target aspect ratio; if the target applications of the plurality of sub-display screens or contents of the target applications displayed respectively are independent of each other, each of the sub-display screens is used as an independent display screen to adjust an aspect ratio of each of the sub-display screens according to the preset aspect ratio of an application used by each of the sub-display screens to enable the value of the aspect ratio of each of the sub-display screens to reach the respective target aspect ratio.

For example, in the control method for the display screen provided by an embodiment of the present disclosure, the target applications displayed by the sub-display screens are associated with each other, the transverse size and/or longitudinal size of the sub-display screens are synchronously adjusted respectively, to enable the aspect ratio of the display screens spliced by the sub-display screens to be the target aspect ratio, display contents are associated with each other.

For example, in the control method for the display screen provided by an embodiment of the present disclosure, the transverse sizes and/or the longitudinal sizes of the plurality of sub-display screens are synchronously adjusted respectively, to enable heights in the longitudinal direction of an entirety of the whole display screen are same along the transverse direction.

For example, in the control method for the display screen provided by an embodiment of the present disclosure, the target application is started after adjusting the aspect ratio of the display screen.

At least one embodiment of the present disclosure provides a control system for a display screen, the control system for the display screen comprises a target attribute judgment module, an aspect ratio acquisition module, an aspect ratio adjusting control module and a display screen driving device. The target attribute judgment module is configured to judge a target attribute satisfied by the target application, the target attribute corresponds to a preset aspect ratio; the aspect ratio acquisition module is configured to acquire the preset aspect ratio; and the display screen driving device is in signal connection with the aspect ratio adjusting control module, and the aspect ratio adjusting control module is configured to control the display screen to driving device to elongate and shorten in at least one of a transverse direction and a longitudinal direction according to the preset aspect ratio, to adjust an aspect ratio of the display screen so that a value of the aspect ratio of the display screen reaches the target aspect ratio; the aspect ratio of the display screen is a ratio of a size in a transverse direction of a display area of the display screen to a size in a longitudinal direction, and the longitudinal direction intersects with the transverse direction.

For example, in the control system for the display screen provided by an embodiment of the present disclosure, the control system for the display screen is a vehicle-mounted control system for the display screen, and the display screen is a vehicle-mounted display screen.

At least one embodiment of the present disclosure further provides an electronic device which comprises one or more processors and a storage apparatus configured to store one or more program; when the one or more programs are executed by the one or more processors, the one or more processors realize the control method for the display screen provided by any one of the embodiments of the present disclosure.

At least one embodiment of the present disclosure further provides a storage medium comprising computer-executable instructions which, when executed by a computer processor, are used to perform the control method provided by any one of the embodiments of the present disclosure.

### BRIEF DESCRIPTION OF DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
Fig. 1 is a flowchart of a control method for a display screen provided by an embodiment of the present disclosure;
Fig. 2 is a schematic diagram of the matching between the display screen and the target application before and after adjusting the aspect ratio of the display screen in an embodiment of the present disclosure;
Fig. 3A is a flowchart of a method for judging the target attribute satisfied by a target application and obtaining a preset aspect ratio provided by an embodiment of the present disclosure;
Fig. 3B is a flowchart of another method for judging the target attribute satisfied by the target application and obtaining the preset aspect ratio according to an embodiment of the present disclosure;
Fig. 4 is a flowchart of a method for obtaining a preset aspect ratio provided by an embodiment of the present disclosure;
Fig. 5A is a flowchart of another method for obtaining a preset aspect ratio provided by an embodiment of the present disclosure;
Fig. 5B is a flowchart of another method for obtaining a preset aspect ratio provided by an embodiment of the present disclosure;
Fig. 6 is a flowchart of another method for obtaining a preset aspect ratio provided by an embodiment of the present disclosure;
Fig. 7 is a flowchart of another method for obtaining a preset aspect ratio provided by an embodiment of the present disclosure;
Fig. 8 is a flowchart of another method for controlling the aspect ratio of a display screen provided by an embodiment of the present disclosure;
Fig. 9 is a flowchart of another control method for a display screen provided by an embodiment of the present disclosure;
Fig. 10 is a schematic diagram of another control method for a display screen provided by an embodiment of the present disclosure;
Fig. 11 is a flowchart of another method for controlling the aspect ratio of a display screen provided by an embodiment of the present disclosure;
Fig. 12 is a schematic diagram of another control method for a display screen provided by an embodiment of the present disclosure;
Fig. 13 is a schematic block diagram of a control system for a display screen provided by at least one embodiment of the present disclosure;
Fig. 14 is a schematic block diagram of an electronic device provided by at least one embodiment of the present disclosure;
Fig. 15 is a schematic diagram of a non-transitory computer-readable storage medium provided by at least one embodiment of the present disclosure;
Fig. 16 is a schematic diagram of a hardware environment provided by at least one embodiment of the present disclosure.

### DETAILED DESCRIPTION

In order to make objects, technical details and advantages of the embodiments of the disclosure apparent, the technical solutions of the embodiments will be described in a clear and fully understandable way in connection with the drawings related to the embodiments of the disclosure. Apparently, the described embodiments are just a part but not all of the embodiments of the disclosure. Based on the described embodiments herein, those skilled in the art can obtain other embodiment (s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms "comprise," "comprising," "comprise," "comprising," etc., are intended to specify that the elements or the objects stated before these terms encompass the elements or the objects and equivalents thereof listed after these terms, but do not preclude the other elements or objects.

When the size of the display area of the display screen does not match the size of the application software used, it will greatly affect the user's viewing experience. This problem also exists for vehicle-mounted display screens. The sizes of vehicle-mounted display screens are diverse and different, so it is difficult for application software manufacturers to adapt and develop for most vehicle-mounted display screens to make the interface size of application software match the size of vehicle-mounted display screens. Therefore, in order to improve the display effect and user experience of vehicle-mounted display screens, a vehicle-mounted display system that can adapt the interface size of application software to the size of vehicle-mounted display screen is needed.

At least one embodiment of the present disclosure provides a control method for a display screen, the control method comprises: judging a target attribute satisfied by a target application, wherein the target attribute corresponds to a preset aspect ratio; obtaining the preset aspect ratio; and adjusting an aspect ratio of the display screen according to the preset aspect ratio to make a value of the aspect ratio of the display screen reach a target aspect ratio, where the aspect ratio of the display screen is a ratio of a size in a transverse direction of a display area of the display screen to a size in a longitudinal direction, and the longitudinal direction intersects with the transverse direction. For example, the control method for the display screen can be used for a vehicle-mounted display screen. In the control method for the display screen provided by the embodiment of the present disclosure, the aspect ratio of the display screen is directly adjusted according to the preset aspect ratio corresponding to the target attribute satisfied by the target application to be displayed on the display screen, and the preset aspect ratio is an existing aspect ratio, so that the method for adjusting the aspect ratio of the display screen is simple and efficient, and the aspect ratio of the display screen can be quickly matched with the aspect ratio of the interface of the application software (that is, the target application) that the user wants to display with the display screen, the gap between the aspect ratio of the display screen and the aspect ratio of the interface of the target application can be reduced, and even the two can be made equal, thus improving the user's experience.

At least one embodiment of the present disclosure provides a control system for a display screen, the control system for the display screen comprises a target attribute judgment module, an aspect ratio acquisition module, an aspect ratio adjusting control module and a display screen driving device. The target attribute judgment module is configured to judge a target attribute satisfied by the target application, the target attribute corresponds to a preset aspect ratio; the aspect ratio acquisition module is configured to acquire the preset aspect ratio; and the display screen driving device is in signal connection with the aspect ratio adjusting control module, and the aspect ratio adjusting control module is configured to control the display screen to driving device to elongate and shorten in at least one of a transverse direction and a longitudinal direction according to the preset aspect ratio, to adjust an aspect ratio of the display screen so that a value of the aspect ratio of the display screen reaches the target aspect ratio; the aspect ratio of the display screen is a ratio of a size in a transverse direction of a display area of the display screen to a size in a longitudinal direction, and the longitudinal direction intersects with the transverse direction.

At least one embodiment of the present disclosure further provides an electronic device which comprises one or more processors and a storage apparatus configured to store one or more program; when the one or more programs are executed by the one or more processors, the one or more processors realize the control method for the display screen provided by any one of the embodiments of the present disclosure.

At least one embodiment of the present disclosure further provides a storage medium comprising computer-executable instructions which, when executed by a computer processor, are used to perform the control method provided by any one of the embodiments of the present disclosure.

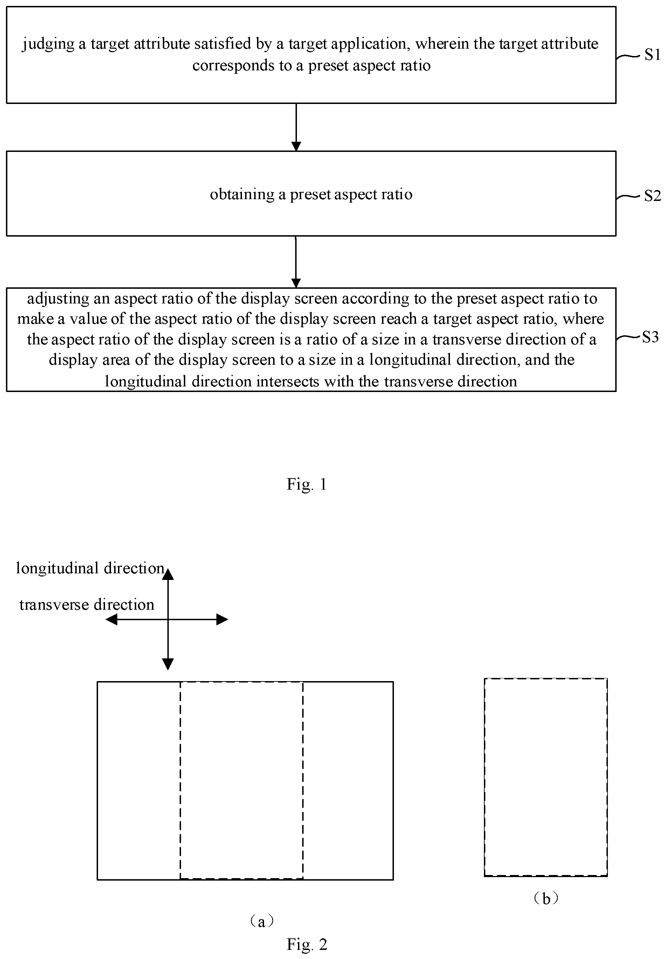

Illustratively, Fig. 1 is a flowchart of a control method for a display screen provided by an embodiment of the present disclosure. Referring to Fig. 1, at least one control method for a display screen provided by an embodiment of the present disclosure includes the following steps S1 to S3.
S1, judging a target attribute satisfied by a target application, wherein the target attribute corresponds to a preset aspect ratio;
S2, obtaining a preset aspect ratio;
S3, adjusting an aspect ratio of the display screen according to the preset aspect ratio to make a value of the aspect ratio of the display screen reach a target aspect ratio, where the aspect ratio of the display screen is a ratio of a size in a transverse direction of a display area of the display screen to a size in a longitudinal direction, and the longitudinal direction intersects with the transverse direction.

For example, the control method for the display screen can be used for a vehicle-mounted display screen. The following specific embodiments introduce the control method and control system of the display screen provided by the present disclosure by taking the application scenario that the display screen is a vehicle-mounted display screen as an example, but it is not limited to the vehicle-mounted display screen, and can be any type of display device, such as the display screen of any device with display function such as a mobile phone and a tablet computer.

In the control method for the display screen provided by the embodiment of the present disclosure, the aspect ratio of the display screen can be directly adjusted according to the preset aspect ratio corresponding to the target attribute satisfied by the target application to be displayed on the display screen, and the preset aspect ratio is an existing aspect ratio, so that the method for adjusting the aspect ratio of the display screen is simple and efficient, it is unnecessary to obtain the aspect ratio of the content of the target application (which can be understood as the interface of the target application itself) to be started by the user and adjust the aspect ratio of the display screen accordingly, so that the aspect ratio of the display screen can be quickly matched with the aspect ratio of the interface of the application software (that is, the target application) that the user wants to display with the display screen, the gap between the aspect ratio of the display screen and the aspect ratio of the interface of the target application can be reduced, and even the two can be made equal, thus improving the user's experience.

For example, the transverse direction refers to the direction that is basically parallel to the ground, and the longitudinal direction intersects the transverse direction. For example, the display screen is a rectangular screen, the longitudinal direction is perpendicular to the transverse direction. In the case that the display screen is a vehicle-mounted display screen, the transverse direction refers to the direction that is basically parallel to the bottom surface in the cab of the vehicle, or the direction that is basically parallel to the real-time road surface when driving. Of course, the transverse direction and the longitudinal direction are not limited to the above situations, and only common situations are given here as an example.

The target application may be various application software, applets, etc. that can be loaded on the display device, and it is an interface that the user wants to start with a display device including a display screen to display the target application on the display screen. Illustratively, the target applications may include multimedia applications (video and audio playing applications), navigation applications (Gaode map, Baidu map, etc.), shopping applications (Taobao, JD.COM, etc.), social applications (WeChat, QQ, etc.) and so on. Of course, the target application is not limited to the categories listed above, and the specific types of the target application are not limited by the embodiments of this disclosure.

It should be noted that the target attributes satisfied by the target application may include the device attributes that have been adapted to the current display screen and the devices that the target application has adapted to, etc., which will be described in detail below.

Adjusting the aspect ratio of the display screen mentioned here refers to adjusting the transverse or longitudinal sizes of the actual display screen used by users to adjust the aspect ratio of the display screen participating in the display, so as to adjust the number of pixels participating in the display in the transverse direction or the longitudinal direction, that is, to adjust the aspect ratio of the display screen, instead of just keeping the transverse or longitudinal sizes of the display screen unchanged, only adjusting the proportion of the display screen in the display area of the whole display screen.

Fig. 2 is a schematic diagram of the matching between the display screen and the target application before and after adjusting the aspect ratio of the display screen in an embodiment of the present disclosure. In (a) and (b) of Fig. 2, the solid line frame represents the edge of the display area of the display screen, and the dashed line frame represents the edge of the interface of the target application. (a) of Fig. 2 shows a case where the display screen does not match the aspect ratio of the target application before the aspect ratio of the display screen is adjusted, and (a) of Fig. 2 shows a case where the display screen matches the aspect ratio of the target application after the aspect ratio of the display screen is adjusted by the control method provided by the embodiment of the present disclosure.

For example, at least one of the transverse size and the longitudinal size of the display screen is adjustable so that the aspect ratio of the image displayed by the display screen is adjustable, that is, at least one of the transverse size and the longitudinal size of the display screen is changed so that the aspect ratio of the display area displayed by the screen is changed. Taking the vehicle-mounted display device as an example, for example, the vehicle-mounted display device further comprises a display screen driving device, and the display screen driving device is configured to drive the display screen to elongate and shorten in at least one of the transverse direction and the longitudinal direction, so as to adjust the transverse and/or longitudinal sizes of the display screen, thereby realizing the change of the aspect ratio of the display screen. The specific mechanical structure design of changing the aspect ratio of the display screen, such as the display screen driving device, can refer to the conventional design in this field, and this disclosure embodiment does not limit it.

When the vehicle-mounted display screen can elongate and shorten in both the transverse direction and the longitudinal direction, the following specific ways may be adopted:
(1) adjusting the longitudinal size first, and then adjust the transverse size, that is, the elongation and shortening range in the longitudinal direction is exhausted first, and then adjust the transverse size when it cannot meet the requirements;
(2) adjusting the transverse size first, and then adjust the longitudinal size;
(3) adjusting the longitudinal size and the transverse size at the same time, and a recommended value of an elongation and shortening range (80% elongation and shortening range) in the longitudinal direction and a recommended value of an elongation and shortening range (30% elongation and shortening range) in the transverse direction may be set. The recommended value refers to a ratio of a size to which directly scaling the size of the screen in the respective direction to the largest size in this respective direction. The specific recommended value may be selected according to the hardware. If interference in the transverse direction is small (including interference to the co-driver's activities and interference to the main driver's sight, etc.), the transverse recommended value may be increased, and if interference in the longitudinal direction is small, the longitudinal recommended value may be increased.

For example, the control method for the display screen provided by the embodiment of the present disclosure further includes: starting the target application after adjusting the aspect ratio of the display screen, so that the user can watch the interface of the target application matching the aspect ratio of the display screen after starting the target application, and obtain a better use experience.

For example, the control method for the display screen provided by at least one embodiment of the present disclosure further includes: after the user selects the target application, the system controls to adjust the aspect ratio of the display screen, so that the aspect ratio of the display screen can match the aspect ratio of the application, and a better user experience can be obtained.

For example, the control method for the display screen provided by at least one embodiment of the present disclosure further includes: after a user selects a target application, the system controls to adjust the aspect ratio of the display screen to a first preset aspect ratio, so that the aspect ratio of the display screen can match the aspect ratio of the application; after the user further selects the content of the target application, the aspect ratio of the display screen is further adjusted to a second preset aspect ratio according to the content of the target application, so that the aspect ratio of the display screen can match the aspect ratio of the content of the target application, and a better user experience can be obtained.

For example, before the step of adjusting the aspect ratio of the display screen is executed, the control method for the display screen provided by the embodiment of the present disclosure further includes: turning on the display device including the display screen, for example, automatically turning on the vehicle-mounted display device after the vehicle is started; and receiving the trigger information of the target application, for example, the user selects and triggers the target application through touching the vehicle display.

For example, adjusting the aspect ratio of the display screen according to the preset aspect ratio includes: adjusting the aspect ratio of the display screen to the preset aspect ratio, and the target aspect ratio is equal to the preset aspect ratio. Therefore, the aspect ratio of the display screen can be more directly and quickly matched with the preset and existing target aspect ratio, and the better aspect ratio of the display screen can be quickly matched with the aspect ratio of the interface of the application to be started by the user, so as to better improve the user experience.

Of course, in other embodiments, the aspect ratio of the display screen can be adjusted to a value calculated based on the preset aspect ratio, and the aspect ratio of the display screen and the preset aspect ratio are not necessarily equal, for example, the target aspect ratio may be greater than or less than the preset aspect ratio, and the calculation method may be set as required.

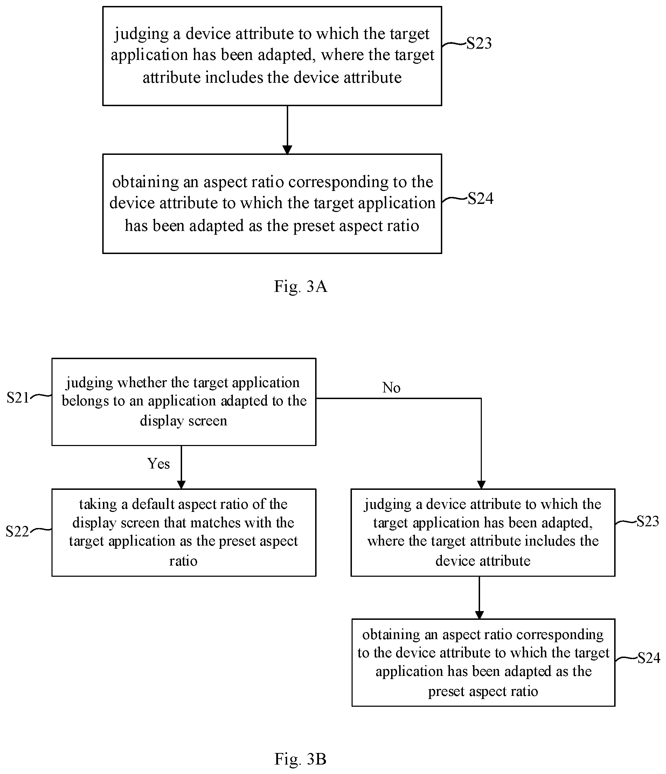

Fig. 3A is a flowchart of a method for judging the target attribute satisfied by a target application and obtaining the preset aspect ratio according to an embodiment of the present disclosure. Referring to Fig. 3A, judging the target attributes satisfied by the target application and obtaining the preset aspect ratio include steps S23 to S24.
S23: judging a device attribute to which the target application has been adapted, where the target attribute includes the device attribute to which the target application has been adapted;
S24: obtaining an aspect ratio corresponding to the device attribute to which the target application has been adapted as the preset aspect ratio.

In this way, the aspect ratio of the display screen can be adjusted according to the existing aspect ratio corresponding to the device attribute to which the target application has been adapted, for example, the aspect ratio of the display screen may be directly adjusted to the existing aspect ratio to which the target application has been adapted, so that the gap between the aspect ratio of the target application and the aspect ratio of the display screen can be reduced quickly, at least to some extent, and the matching degree between the two can be improved, thereby improving the user's experience in using the vehicle display screen.

Device attributes can be inherent attributes of a device, such as device type, device model, etc., as described below.

Fig. 3B is a flowchart of another method for judging the target attribute satisfied by the target application and obtaining the preset aspect ratio provided by an embodiment of the present disclosure. Referring to Fig. 3B, for example, in the control method for the display screen provided by at least one embodiment, judging the target attribute satisfied by the target application and obtaining the preset aspect ratio includes steps S21~S22.

S21: judging whether the target application belongs to an application adapted to the display screen, and if so, executing step S22.

S22: taking a default aspect ratio of the display screen that matches with the target application as the preset aspect ratio, where the target attribute satisfied by the target application includes being adapted to the current display screen.

When the target application is judged to be an application adapted to the display screen and step S22 is executed, the default aspect ratio is taken as the preset aspect ratio to start the application. When the default aspect ratio is taken as the final target aspect ratio of the display screen, the result of adjusting the aspect ratio of the display screen according to the preset aspect ratio to make the value of the aspect ratio of the display screen reach the target aspect ratio is that the target application is started directly on the basis of the default aspect ratio of the display screen without adjusting the aspect ratio of the display screen.

For example, in at least one embodiment, referring to Fig. 3B, if the target application does not belong to an application that has been adapted to the display screen, the above steps S23~S24 are executed.

In this way, at least to some extent, the gap between the aspect ratio of the target application and the aspect ratio of the display screen can be quickly reduced, and the matching degree between them can be improved, thus enhancing the user's experience in using the vehicle-mounted display screen.

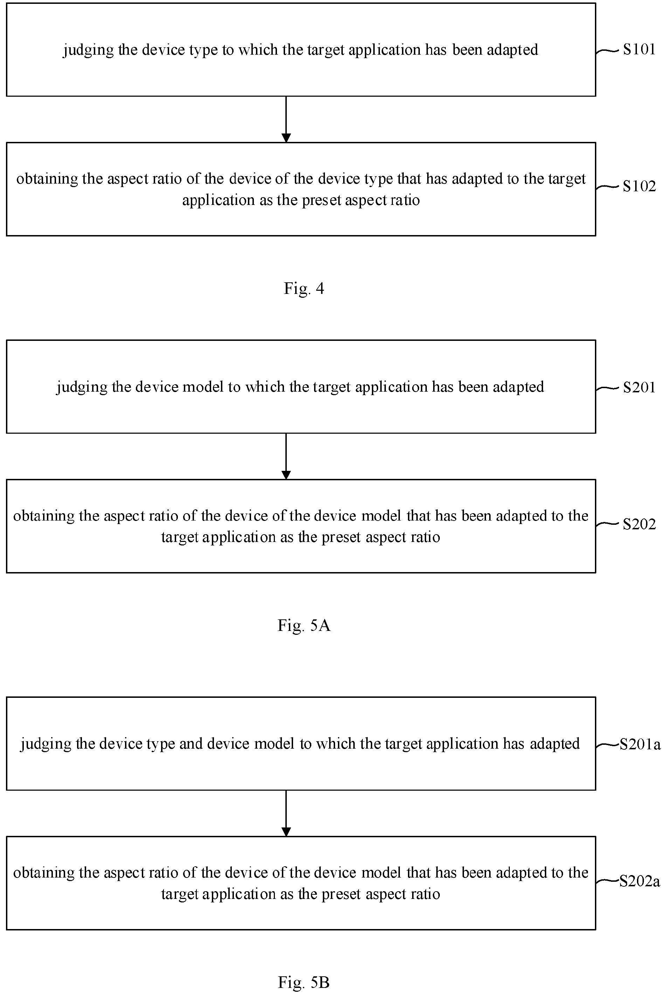

Fig. 4 is a flowchart of a method for obtaining the preset aspect ratio provided by an embodiment of the present disclosure. For example, the above device attribute is the device type, and the control method for the display screen includes steps S101~ S102 shown in Fig. 4.
S101: judging the device type to which the target application has been adapted;
S102: obtaining the aspect ratio of the device type that has adapted to the target application as the preset aspect ratio.

Device type may include a variety, such as mobile phones, tablets, notebook computers, desktop computers, and so on. The target application usually has an adapted device type. The method shown in steps S101~ S102 can quickly adjust the current display screen aspect ratio according to the existing aspect ratio that has been adapted to the device type, quickly reduce the gap between the aspect ratio of the target application and the display screen aspect ratio, improve the matching degree between them, and thus enhance the user's experience in using the vehicle display screen.

Specifically, for example, if the target application has a first preset aspect ratio that has been adapted to the first type of device, the aspect ratio of the display screen is adjusted to the first preset aspect ratio, and the first preset aspect ratio is less than or equal to 1, that is, the aspect ratio of the display screen of the first type of device that has been adapted to the target application is less than or equal to 1. For example, devices of the first type include devices with communication functions such as mobile phones, so that the target aspect ratio of the current display screen can be quickly locked, and the aspect ratio of the current display screen can be quickly adjusted to match the target application according to the first preset aspect ratio of the first type that has been matched with the target application. For example, the first aspect ratio is in a range of 1:1~1:2.5, of course, this is only an example, and the numerical range of the first aspect ratio is not limited to this, and the first type of device is not limited to the above-mentioned enumerated types.

For example, the mobile phone includes the foldable mobile phone and the non-foldable mobile phone, and the first preset aspect ratio of the mobile phone adapted to the target application may be the aspect ratio of the folded mobile phone screen or the aspect ratio of the mobile phone screen before folding, ss long as it is matched with the target application, the above method can be used to adjust the aspect ratio of the current display screen, such as the vehicle-mounted display screen.

For another example, if the target application has been adapted to the second type of device, the aspect ratio of the display screen is adjusted to a second preset aspect ratio, and the aspect ratio of the display screen of the second type of device that has been adapted to the target application is greater than 1, that is, the aspect ratio of the display screen of the second type of device that has been adapted to the target application is greater than 1. For example, the devices of the second type include tablets, notebook computers, desktop computers, etc., so that the target aspect ratio of the current display screen can be quickly locked, and the aspect ratio of the current display screen can be quickly adjusted to match the target application according to the second preset aspect ratio of the device of the second type that has been matched with the target application. For example, the second aspect ratio is in a range of 3:2~2:1. Of course, this is merely an example, the numerical range of the second aspect ratio is not limited to this, and the second type of device is not limited to the above-mentioned listed types.

Fig. 5A is a flowchart of another method for obtaining the preset aspect ratio provided by an embodiment of the present disclosure. For example, the above device attributes include the device model, and the control method for the display screen provided by at least one embodiment of the present disclosure includes steps S201~ S202 shown in Fig. 5A.
S201: judging the device model to which the target application has been adapted;
S202: obtaining the aspect ratio of the device of the device model that has been adapted to the target application as the preset aspect ratio.

By adopting this method, the aspect ratio that the device of this model has been matched with the target application can be obtained as the preset aspect ratio according to the specific device model, so as to adjust the aspect ratio of the display screen more accurately and improve the matching effect of the aspect ratio of the current display screen with the target application.

Fig. 5B is a flowchart of another method for obtaining the preset aspect ratio provided by an embodiment of the present disclosure. For example, in another embodiment, on the basis of the device type, the device attribute also includes the device model. In the control method for the display screen provided by at least one embodiment of the present disclosure, the device model is judged in addition to the device type, so that the control method for the display screen provided by at least one embodiment of the present disclosure includes steps S201a~ S202a shown in Fig. 5B.
S201a: judging the device type and device model to which the target application has adapted;
S202a: obtaining the aspect ratio of the device of the device model that has been adapted to the target application as the preset aspect ratio.

In this way, the device model is also judged on the basis of judging the device type. When the device type is the same, such as a mobile phone or a tablet, there may be some differences between the aspect ratios of different types of devices that have been matched with the target application. By adopting this method, the aspect ratio of this type of device that has been matched with the target application can be obtained according to the device type as the preset aspect ratio, so as to adjust the aspect ratio of the display screen more accurately and improve the matching effect of the aspect ratio between the current display screen and the target application.

Illustratively, for example, it is determined which model of mobile device the target application belongs to. For example, if the target application is adapted to Huawei mobile devices, the aspect ratio of the current display screen, such as the vehicle-mounted display screen, is adjusted to 1: 2.1; further, if the target application is specifically adapted to Huawei mate 60, the aspect ratio of the current display screen is adjusted to 1:2.2.

Illustratively, for example, it is judged that the target application belongs to which model of tablet is specifically adapted. For example, if the target application is adapted to Huawei-equipped matePad device, the aspect ratio of the current display screen, such as the vehicle-mounted display screen, is adjusted to 1.5:1.

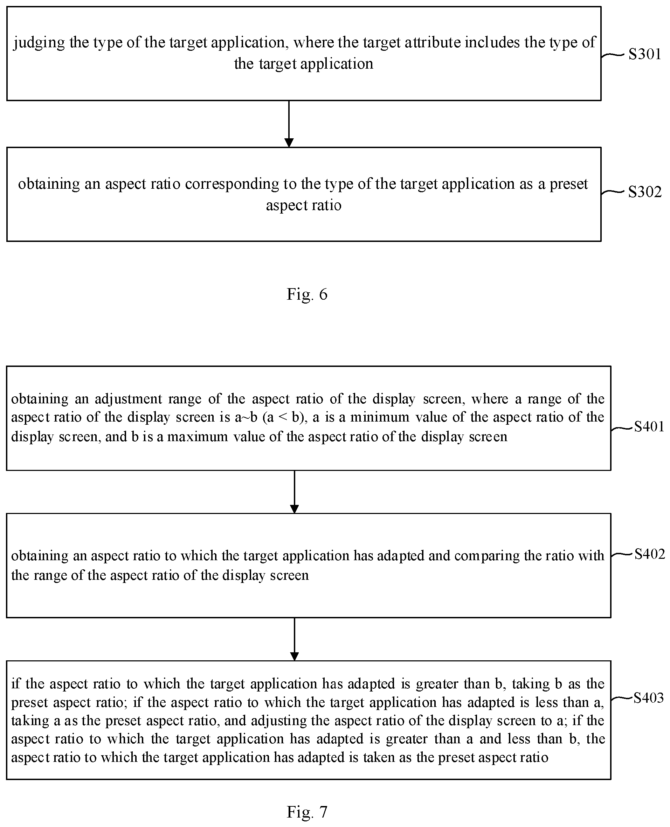

Fig. 6 is a flowchart of another method for obtaining a preset aspect ratio provided by an embodiment of the present disclosure. The control method for the display screen provided by at least one embodiment of the present disclosure includes steps S301~ S302 shown in Fig. 6.
S301: judging the type of the target application, wherein the target attribute includes the type of the target application;
S302: obtaining an aspect ratio corresponding to the type of the target application as a preset aspect ratio.

Different types of applications already usually have the aspect ratio of their adapted display screens. Through the method shown in steps S301~ S302, the aspect ratio of the display screen matched with the target application can be quickly locked according to the type of the target application, so that the aspect ratio of the display screen can be simply and efficiently adjusted according to the aspect ratio matched with the type of the target application.

For example, the types of target applications include at least one of multimedia applications, short video applications, navigation applications, social networking applications and shopping applications. Of course, the types of target applications are not limited to those listed above.

For example, the control method for the display screen includes: obtaining the maximum aspect ratio and the minimum aspect ratio of the display screen, if the target application type is a multimedia application (such as Youku, Tencent Video, etc.), the preset aspect ratio is the maximum aspect ratio of the current display screen, for example, the aspect ratio of the current display screen can be directly adjusted to the maximum aspect ratio of the display screen, that is, when the application type is suitable for a significantly larger aspect ratio, such as greater than 1, the aspect ratio of the current display screen can be directly adjusted to the maximum aspect ratio of the display screen, for example, to the maximum aspect ratio of 21:9; if the target application type is a short video application (such as Tik Tok, Kwai, etc.), the preset aspect ratio is the minimum aspect ratio of the current display screen, for example, the aspect ratio of the current display screen can be directly adjusted to the minimum aspect ratio of the display screen, that is, when the application type is obviously smaller, such as less than 1, the aspect ratio of the current display screen can be directly adjusted to the minimum aspect ratio of the display screen; if the target application type is a navigation application (such as Gaode map and Baidu map), the preset aspect ratio is between the minimum aspect ratio and the maximum aspect ratio of the current display screen, that is, when the application type is suitable for moderate aspect ratio, the aspect ratio of the current display screen after being adjusted can be between the minimum aspect ratio and the maximum aspect ratio of the current display screen. By this method, the aspect ratio of the display screen that is close to the aspect ratio matching with the target application can be quickly locked according to the type of the target application, and the aspect ratio of the current display screen can be directly adjusted according to the maximum aspect ratio or the minimum aspect ratio of the display screen, which can simply and efficiently narrow the gap between the aspect ratio of the target application interface and the aspect ratio of the current display screen to a certain extent and improve the matching degree.

For example, if the target application type is a multimedia application, the control method for the display screen includes: judging whether the display screen is scalable in the longitudinal direction (please refer to the above for the description of the longitudinal direction), if so, adjusting the aspect ratio of the display screen to a third preset aspect ratio corresponding to the multimedia application, where for example, the third preset aspect ratio is greater than 1, if not, obtaining the maximum aspect ratio of the display screen, and adjusting the aspect ratio of the display screen to the maximum aspect ratio of the display screen. Generally, the aspect ratio of media applications is greater than 1, for example, 16:9, for example, the third preset aspect ratio is 16:9, and of course it is not limited to 16:9. Therefore, the aspect ratio of the display screen can be adapted to the aspect ratio of media applications as much as possible.

For example, if the type of the target application is a short video application, the control method for the display screen provided by at least one embodiment of the present disclosure includes: judging whether the current display screen is scalable in the longitudinal direction, and if so, adjusting the aspect ratio of the current display screen to a fourth preset aspect ratio corresponding to the short video application, where the fourth preset aspect ratio is less than 1, such as 1:2.1, 1:2.2, 1:2.3, and the like; if not, obtaining the minimum aspect ratio of the display screen and adjusting the aspect ratio of the display screen to the minimum aspect ratio of the display screen. Therefore, under the condition that the display screen can be telescopic in the longitudinal direction, the adjustment range of the longitudinal size can be larger to achieve a smaller aspect ratio and facilitate reducing the aspect ratio, so that it is easier to adjust the aspect ratio of the current display screen to the fourth preset aspect ratio (less than 1) corresponding to the short video application in this case, so that the aspect ratio of the current display screen and the target application can achieve a better matching effect, and the user experience is greatly improved. However, it is difficult to achieve a smaller aspect ratio of the current display screen when the display screen cannot be scalable in the longitudinal direction, in this case, it is simple and direct to directly adjust the aspect ratio of the display screen to the minimum aspect ratio of the display screen, which saves the consideration of other factors and can quickly adjust the aspect ratio of the current display screen to reduce the difference between it and the aspect ratio of the target application interface to a certain extent.

For example, in another embodiment, if the type of the target application is a multimedia application, the control method includes: judging the playing history of the multimedia application; and obtaining the aspect ratio of the multimedia content in the playing history as the preset aspect ratio. For example, the aspect ratio of the multimedia content with the most times or frequencies in the playing history is taken as the preset aspect ratio. For example, the aspect ratio of the current display screen can be directly adjusted to the preset aspect ratio, so as to simply and efficiently reduce the difference between the aspect ratios of the current display screen and the interface of the target application. For example, in this embodiment, the control method further includes: obtaining the content from the server of the media application by the display device including the display screen.

For example, in another embodiment, the system can obtain the aspect ratio of the display screen of other display devices that start the target application under the user account, the target application herein may be any kind of the above-mentioned applications, and the aspect ratio of the vehicle-mounted display device is adjusted according to the aspect ratio of the latest applicable device under the user account, for example, the aspect ratio of the mobile device that is used or most frequently used in a recent preset period of time may be used as the aspect ratio of the latest applicable device; for example, if the aspect ratio of the mobile device used or most frequently used in the recent preset period of time is 1:2.1, it is judged whether the minimum aspect ratio of the display device is less than or equal to 1:2.1, and if it is less than or equal to 1:2.1, the aspect ratio of the vehicle-mounted display device is set to 1:2.1. Of course, this data is merely exemplary and is not limited to 1:2.1.

For example, the control method for the display screen provided by at least one embodiment of the present disclosure includes: if the type of the target application is a multimedia application, controlling the display screen to elongate and shorten at a first rate to adjust the aspect ratio of the display screen; if the application type is a short video application, controlling the display screen to elongate and shorten at a second rate different from the first rate to adjust the aspect ratio of the display screen. Compared with multimedia applications, the difference between the transverse and longitudinal sizes of the display screen adapted to short video applications is different, the difference between the transverse and longitudinal sizes of the display screen is different, so adopting different elongation and shortening rates is beneficial to adapt to different adjustment ranges, so as to improve the adjustment efficiency of the aspect ratio of the display screen.

For example, the second rate is greater than the first rate, because the difference between the transverse size and the longitudinal size of the display screen adapted to the short video application often exceeds the difference between the default transverse size and the longitudinal size of the vehicle-mounted display screen. Therefore, increasing the elongation and shortening rate of the display screen for the short video application is conducive to quickly realizing the size of the display screen matching the short video application and improving the adjustment efficiency of the aspect ratio of the display screen.

For example, the elongation and shortening direction of the display screen is the longitudinal direction, and the second speed is greater than the first speed. Because the short video application needs a larger size in the longitudinal direction, the larger second speed is conducive to improving the adjustment speed of the aspect ratio of the display screen that is adapted to the short video application.

For example, the elongation and shortening direction of the display screen is the transverse direction, and the second speed is less than the first speed. Similarly, due to the larger size required by multimedia applications in the transverse direction, the larger first speed is conducive to improving the adjustment speed of the aspect ratio of the display screen that is adapted to the multimedia application.

Fig. 7 is a flowchart of another method for obtaining the preset aspect ratio provided by an embodiment of the present disclosure. The control method provided by at least one embodiment of the present disclosure includes steps S401~S403 shown in Fig. 7.
S401: obtaining an adjustment range of the aspect ratio of the display screen, where a range of the aspect ratio of the display screen is a~b (a < b), a is a minimum value of the aspect ratio of the display screen, and b is a maximum value of the aspect ratio of the display screen;
S402: obtaining an aspect ratio to which the target application has adapted and comparing the ratio with the range of the aspect ratio of the display screen;
S403: if the aspect ratio to which the target application has adapted is greater than b, taking the maximum value b of the aspect ratio of the display screen as the preset aspect ratio; if the aspect ratio to which the target application has adapted is less than a, taking a as the preset aspect ratio, and adjusting the aspect ratio of the display screen to a; if the aspect ratio to which the target application has adapted is greater than a and less than b, the aspect ratio to which the target application has adapted is taken as the preset aspect ratio.

Therefore, the appropriate preset aspect ratio can be quickly determined according to the relationship between the aspect ratio to which the target application has adapted and the adjustment range of the aspect ratio of the display screen, so that the aspect ratios of the current display screen and the target application tend to match with each other according to different situations.

Further, for example, a is less than 1 and b is greater than 1. For example, a=1:3 and b=16:9. Of course, the values of a and b are not limited to this value.

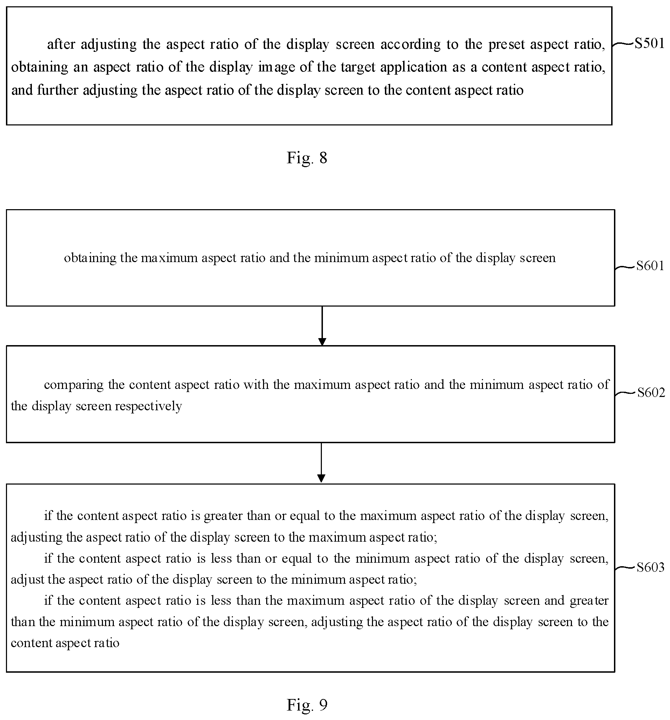

Fig. 8 is a flowchart of another method for controlling the aspect ratio of a display screen provided by an embodiment of the present disclosure. Another embodiment of the present disclosure also provides a control method for a display screen, and the control method for the display screen includes step S501 shown in Fig. 8.

S501: after adjusting the aspect ratio of the display screen according to the preset aspect ratio, obtaining an aspect ratio of the display image of the target application as a content aspect ratio, and further adjusting the aspect ratio of the display screen to the content aspect ratio.

The method shown in Fig. 8 includes the added subsequent adjustment steps, based on the control method of any of the above-mentioned display screens, that is, step-by-step adjustment. First, the existing preset aspect ratio is quickly locked, and the aspect ratio of the display screen is adjusted according to the preset aspect ratio, then the aspect ratio of the display screen is adjusted slightly according to the specific content of the target application, thus the aspect ratio of the display screen is further adjusted to the content aspect ratio, so that the aspect ratio of the display screen is more matched with the aspect ratio of the interface of the target application. Moreover, compared with only slightly adjusting the aspect ratio of the display screen according to the specific content of the target application, the control method provided by this embodiment can not only takes into account the matching degree between the specific content of the target application and the aspect ratio of the display screen, but also takes into account the adjustment efficiency of the aspect ratio of the display screen, which can reduce the time for users to wait for the display screen to elongate and shorten when watching the content of the target application and improve the user experience. For example, in this embodiment, the control method further includes: obtaining the content from the server of the media application by the display device including the display screen.

For example, the aspect ratio of the display screen of the display device is adjusted to the maximum aspect ratio of 21:9, and after the user selects a content with an aspect ratio of 16:9 in the multimedia application, the aspect ratio of the display screen is adjusted to 16:9, so as to further improve the matching degree of the aspect ratio between the target application and the display screen through step-by-step adjustment.

Fig. 9 is a flowchart of another method for controlling the aspect ratio of a display screen provided by an embodiment of the present disclosure. The control method provided by at least one embodiment of the present disclosure includes steps S601~S603 shown in Fig. 9.
S601: obtaining the maximum aspect ratio and the minimum aspect ratio of the display screen;
S602: comparing the content aspect ratio with the maximum aspect ratio and the minimum aspect ratio of the display screen respectively;
S603: if the content aspect ratio is greater than or equal to the maximum aspect ratio of the display screen, adjusting the aspect ratio of the display screen to the maximum aspect ratio;
if the content aspect ratio is less than or equal to the minimum aspect ratio of the display screen, adjust the aspect ratio of the display screen to the minimum aspect ratio;
if the content aspect ratio is less than the maximum aspect ratio of the display screen and greater than the minimum aspect ratio of the display screen, adjusting the aspect ratio of the display screen to the content aspect ratio.

Therefore, both the aspect ratio of the content of the target application and the aspect ratio range of the display screen can be achieved, and the aspect ratio of the display screen can be reasonably adjusted to adapt to the target application.

It should be noted that the longitudinal adjustment of the display screen is merely an example, and in fact, as long as the adjustment is carried out according to the method provided by the embodiment of the present disclosure, it is not limited to adjusting the aspect ratio of the display screen only in the longitudinal direction. In all the control methods of the display screen provided by the embodiments of the present disclosure, the longitudinal size of the display screen can be adjusted in the longitudinal direction, or the transverse size of the display screen can be adjusted in the transverse direction, or both the longitudinal size and the transverse size of the display screen can be adjusted respectively in the longitudinal direction and the transverse direction.

For example, a plurality of elongation and shortening length gradients are arranged in at least one of the transverse direction and the longitudinal direction, and the display screen is controlled to adjust the transverse size and/or the longitudinal size of the display screen according to the elongation and shortening length gradients in at least one of the transverse direction and the longitudinal direction, so as to adjust the aspect ratio of the display screen. Specifically, for example, the plurality of gradients may be equal, and the length of each gradient is a, and the length of the display area of the display screen can be increased or decreased in the transverse and/or longitudinal direction gradient by gradient, that is, the length of the display area of the display screen increases or decreases by a corresponding value of a for each gradient adjustment, which is convenient for users to conveniently and quickly adjust the aspect ratio of the display screen. Of course, multiple gradients may also be unequal. Therefore, step-by-step adjustment can be realized, the adjustment difficulty is reduced, and the aspect ratio of the display screen can be controlled as required, so that the adjustment is more flexible and controllable.

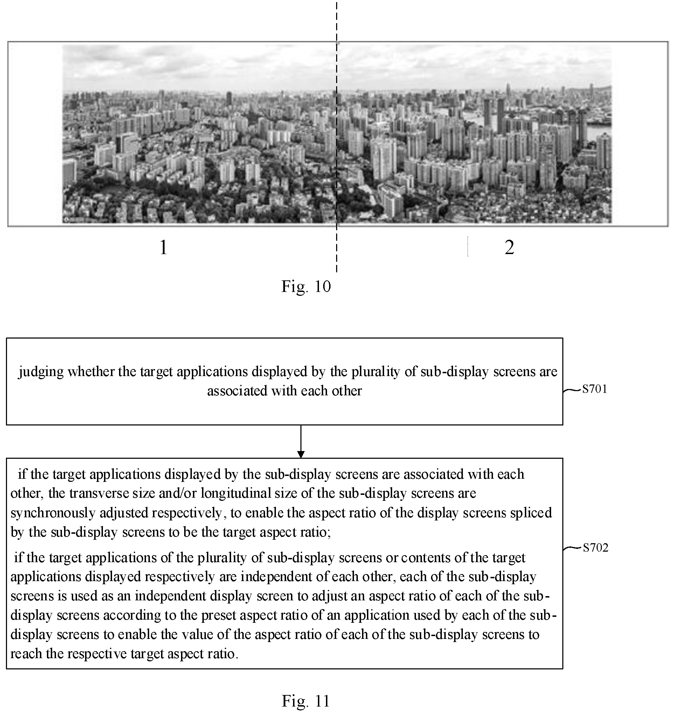

Fig. 10 is a schematic diagram of another display screen control method provided by an embodiment of the present disclosure. For example, a plurality of sub-display screens are spliced with each other to form a display screen, and the sub-display screens are respectively used for displaying corresponding target applications; for example, referring to Fig. 10, a plurality of sub-display screens include a first sub-display screen 1 and a second sub-display screen 2, and the dotted line in Fig. 10 is the dividing line between the first sub-display screen 1 and the second sub-display screen 2, for example, the first sub-display screen 1 and the second sub-display screen 2 are screens close to the main driving position and the co-driver position, respectively.

Fig. 11 is a flowchart of another method for controlling the aspect ratio of a display screen provided by an embodiment of the present disclosure. For example, referring to figs. 10 and 11, the control method for the display screen includes steps S701~S702 shown in Fig. 11.
S701: judging whether the target applications displayed by the plurality of sub-display screens are associated with each other;
S702: if the target applications displayed by the sub-display screens are associated with each other, the transverse size and/or longitudinal size of the sub-display screens are synchronously adjusted respectively, to enable the aspect ratio of the display screens spliced by the sub-display screens to be the target aspect ratio;
if the target applications of the plurality of sub-display screens or contents of the target applications displayed respectively are independent of each other, each of the sub-display screens is used as an independent display screen to adjust an aspect ratio of each of the sub-display screens according to the preset aspect ratio of an application used by each of the sub-display screens to enable the value of the aspect ratio of each of the sub-display screens to reach the respective target aspect ratio.

Therefore, the content of the same target application can be jointly displayed on a screen formed by splicing a plurality of sub-display screens, that is, the contents of the target applications displayed by the plurality of sub-display screens are associated with each other. It can be understood that the target applications displayed by the plurality of sub-display screens are associated with each other, which means that the contents displayed by the plurality of sub-display screens are spliced into the same complete image, that is, a joint image. In this case, the transverse and/or longitudinal sizes of the plurality of sub-display screens can be respectively adjusted at the same time, so that the aspect ratio of the display screens spliced by a plurality of sub-display screens is the target aspect ratio, and the aspect ratio of the spliced screen is matched with that of the joint image.

For example, in the case that target applications are associated with each other and the transverse and/or longitudinal sizes of a plurality of sub-display screens are synchronously adjusted respectively, to enable the aspect ratio of the display screens spliced by a plurality of sub-display screens to be the target aspect ratio, the display contents are associated with each other.

For example, as shown in Fig. 10, for example, when the vehicle is in a rest mode (such as the seat becomes a big bed), the first sub-display screen 1 (with an aspect ratio of 16:9) and the second sub-display screen 2 (with an aspect ratio of 16:9) are combined to form a whole screen (with an aspect ratio of 32: 18), and the first sub-display screen 1 and the second sub-display screen 2 can elongate and shorten at the same time. For example, the whole screen can display images, and the images of the first sub-display screen 1 and the second sub-display screen 2 are spliced with each other to form a complete picture content, so that users can enjoy a big screen experience.

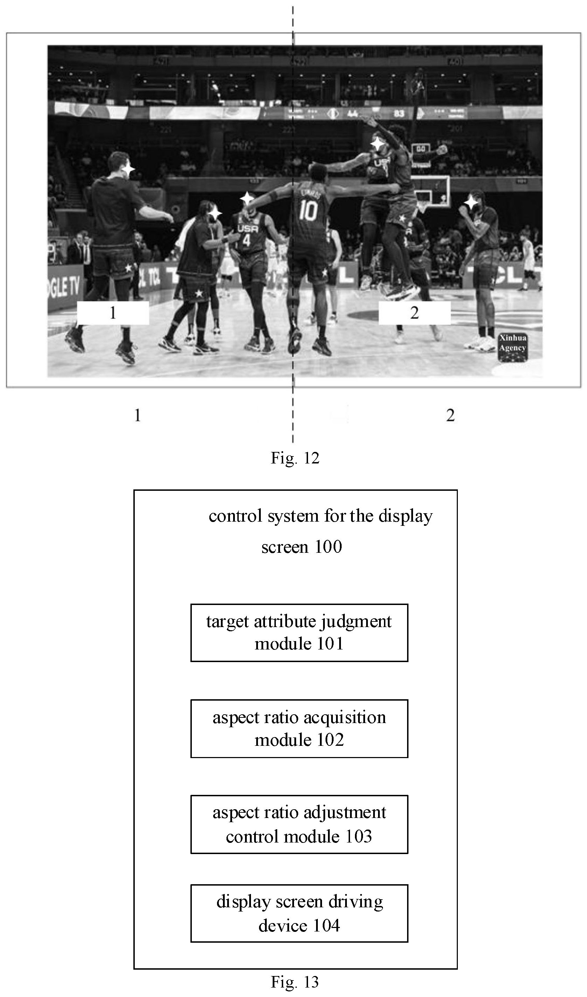

For example, as shown in Fig. 12, the first sub-display screen 1 (for example, with an aspect ratio of 16:9) and the second sub-display screen 2 (for example, with an aspect ratio of 32: 18) are combined to form a whole screen, and the first sub-display screen 1 and the second sub-display screen 2 can elongate and shorten at the same time. For example, the whole screen can also be used for playing videos, and the videos of the first sub-display screen 1 and the second sub-display screen 2 are spliced with each other to form a complete video content.

For example, the transverse and/or longitudinal sizes of a plurality of sub-display screens are adjusted synchronously to make the longitudinal sizes of the whole display screen maintain consistent in the transverse direction, and at the same time, the aspect ratio of the whole display screen spliced by a plurality of sub-display screens can be matched with the aspect ratio of the joint image. When using the splicing screen formed by splicing a plurality of sub-display screens to display interrelated contents, whether the longitudinal sizes of each position of the display screen in the transverse direction are consistent or not has great influence on the viewing experience, and the user's viewing experience can be guaranteed by adopting the above method.

At least one implementation of the present disclosure also provides a control system for the display screen. Fig. 13 is a schematic block diagram of a control system for the display screen provided by at least one embodiment of the present disclosure. Referring to Fig. 13, the control system for the display screen 100 includes a target attribute judgment module 101, an aspect ratio acquisition module 102 and an aspect ratio adjustment control module 103. These modules are interconnected by a bus system and/or other forms of connection mechanisms (not shown). For example, these modules can be realized by hardware (e.g., circuit) modules, software modules or any combination of the two, and the following embodiments are the same, and will not be described in detail. For example, these units can be realized by a central processing unit (CPU), an image processor (GPU), a tensor processor (TPU), a field programmable logic gate array (FPGA) or other forms of processing units with data processing capability and/or instruction execution capability and corresponding computer instructions.

Referring to Fig. 13, the control system for the display screen 100 further includes a display screen driving device 104. The target attribute judging module 101 is configured to judge the target attribute satisfied by the target application, and the target attribute corresponds to a preset aspect ratio; the aspect ratio acquisition module 102 is configured to acquire a preset aspect ratio; the display screen driving device 104 is in signal connection with the aspect ratio adjustment control module 103, and the aspect ratio adjustment control module 103 is configured to control the display screen driving device 104 to drive the display screen to elongate and shorten in at least one of the transverse direction and the longitudinal direction according to the preset aspect ratio, so as to adjust the transverse and/or longitudinal sizes of the display screen, so as to adjust the aspect ratio of the display screen so that the value of the aspect ratio of the display screen reaches the target aspect ratio; the aspect ratio of the display screen is the ratio of the transverse size to the longitudinal size of the display screen, and the longitudinal direction is perpendicular to the transverse direction.

For example, the control system for the display screen is a vehicle-mounted control system for the display screen and the display screen is a vehicle-mounted display screen.

The control system for the display screen provided by the embodiment of the present disclosure can achieve the same working process and technical effect as the embodiment of the control method for the display screen, which is not repeated here. Please refer to the previous description.

The modules and structures of the control system for the display screen 100 shown in Fig. 13 are merely exemplary, not restrictive, and the control system for the display screen 100 may have other components and structures as required.

For example, the target attribute judgment module 101, the aspect ratio acquisition module 102 and the aspect ratio adjustment control module 103 may include codes and programs stored in a memory; the processor can execute the code and program to realize some or all functions of the target attribute judgment module 101, the aspect ratio acquisition module 102 and the aspect ratio adjustment control module 103 as described above. For example, the target attribute judgment module 101, the aspect ratio acquisition module 102, and the aspect ratio adjustment control module 103 may be dedicated hardware devices for realizing some or all functions of the target attribute judgment module 101, the aspect ratio acquisition module 102, and the aspect ratio adjustment control module 103 as described above. For example, the target attribute judgment module 101, the aspect ratio acquisition module 102 and the aspect ratio adjustment control module 103 can be a single circuit board or a combination of multiple circuit boards for realizing the functions described above. In the embodiment of the application, the combination of one circuit board or a plurality of circuit boards may include: (1) one or more processors; (2) one or more non-transitory memories connected with the processor; And (3) firmware stored in memory that is executable by the processor.

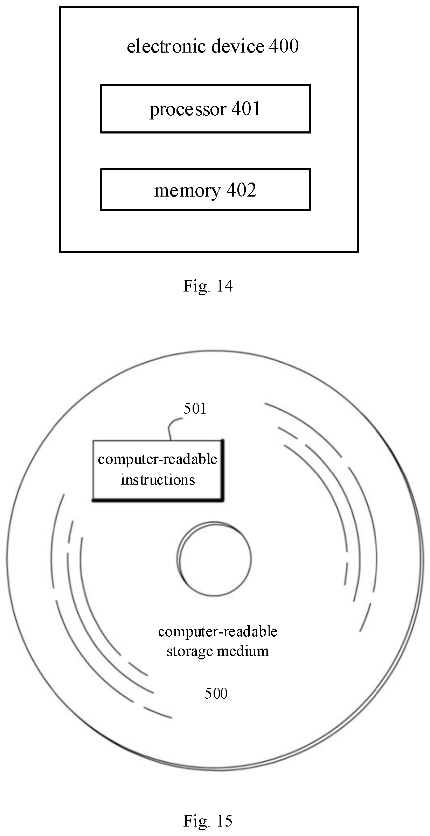

At least one embodiment of the present disclosure also provides an electronic device, and Fig. 14 is a schematic block diagram of an electronic device provided by at least one embodiment of the present disclosure. Referring to Fig. 14, the electronic device includes one or more processors 401 and a storage device 402; the storage device 402 is used for storing one or more programs, and when the one or more programs are executed by one or more processors, the one or more processors can realize any control method for the display screen provided by the embodiment of the present disclosure.

For example, as shown in Fig. 14, the electronic device 400 includes a processor 401 and a memory 402. It should be noted that the components of the electronic device 400 shown in Fig. 14 are only exemplary, not restrictive, and the electronic device 400 may also have other components according to actual application requirements.

For example, the processor 401 and the memory 402 can communicate with each other directly or indirectly.

For example, the processor 401 and the memory 402 may communicate through a network. The network may include a wireless network, a wired network, and/or any combination of wireless and wired networks. The processor 401 and the memory 402 can also communicate with each other through the system bus, which is not limited by this disclosure.

For example, in some embodiments, memory 402 is used to store computer-readable instructions non-instantaneously. When the processor 401 is used to execute the computer-readable instructions, the computer-readable instructions, when executed by the processor 401, realize the control method for the display screen according to any of the above embodiments. For the specific implementation of each step of the control method for the display screen and related explanations, please refer to the embodiment of the control method of the above display screen, and the repetition will not be repeated here.

For example, the processor 401 and the memory 402 can be located on the server side (or in the cloud).

For example, the processor 401 may control other components in the electronic device 400 to perform desired functions. The processor 401 may be a central processing unit (CPU), a Graphics Processing Unit (GPU), a network processor (NP), etc. It can also be a digital signal processor (DSP), an application specific integrated circuit (ASIC), a field programmable gate array (FPGA) or other programmable logic devices, discrete gate or transistor logic devices, and discrete hardware components. Central processing unit (CPU) can be X86 or ARM architecture.

For example, the memory 402 may include any combination of one or more computer program products, which may include various forms of computer-readable storage media, such as volatile memory and/or nonvolatile memory. The volatile memory may include, for example, random access memory (RAM) and/or cache, etc. The nonvolatile memory may include, for example, read-only memory (ROM), hard disk, erasable programmable read-only memory (EPROM), portable compact disk read-only memory (CD-ROM), USB memory, flash memory, and the like. One or more computer-readable instructions may be stored on the computer-readable storage medium, and the processor 401 may execute the computer-readable instructions to realize various functions of the electronic device 400. Various applications and data can also be stored in the storage medium.

At least one embodiment of the present disclosure also provides a storage medium containing computer executable instructions, the computer executable instructions, when executed by a computer processor, are used for executing any one of the control methods for a display screen provided by the embodiments of the present disclosure.

At least one embodiment of the present disclosure also provides that the storage medium of computer-executable instructions may be a non-transitory computer-readable storage medium. Illustratively, Fig. 15 is a schematic diagram of a non-transitory computer-readable storage medium provided by at least one embodiment of the present disclosure.

For example, as shown in Fig. 15, computer-readable instructions 501 are non-temporarily stored on a computer-readable storage medium 500. For example, when the computer-readable instructions 501 are executed by a processor, one or more steps in the image processing method described above may be performed.

For example, the storage medium 500 can be applied to the electronic device 400. For example, the storage medium 500 may include the memory 402 in the electronic device 400.

For example, the description of the storage medium 500 can refer to the description of the memory 402 in the embodiment of the electronic device 400, and the repetition is not repeated here.

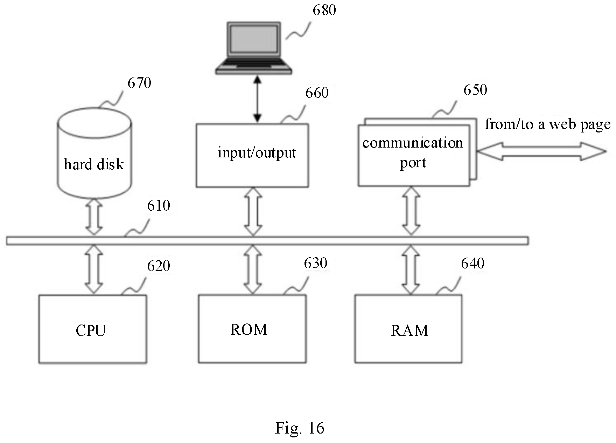

Fig. 16 is a schematic diagram of a hardware environment provided by at least one embodiment of the present disclosure. The electronic device provided by the present disclosure can be applied to the Internet system.

The functions of the control system for the display screen and/or electronic device involved in this disclosure can be realized by using the computer system provided in Fig. 16. The specific system in this embodiment uses a functional block diagram to explain a hardware platform with a user interface. This computer device can be a general-purpose computer device or a computer device with a specific purpose. Both kinds of computer device can be used to realize the image processing device and/or electronic device in this embodiment. A computer system may include any component that implements the information needed to realize image processing as currently described. For example, a computer system can be realized by a computer device through its hardware devices, software programs, firmware and their combinations. For convenience, only one computer device is shown in Fig. 16, but the computer functions related to information needed for image processing described in this embodiment can be implemented by a group of similar platforms in a distributed manner, which disperses the processing load of the computer system.

As shown in Fig. 16, the computer system can include a communication port 650, which is connected with a network for data communication. For example, the computer system can send and receive information and data through the communication port 650, that is, the communication port 650 can realize wireless or wired communication between the computer system and other electronic devices to exchange data. The computer system may also include a processor group 620 (i.e., the processors described above) for executing program instructions. The processor group 620 may be composed of at least one processor (e.g., CPU). The computer system may include an internal communication bus 610. The computer system may include different forms of program storage units and data storage units (i.e., the memory or storage medium described above), such as hard disk 670, read-only memory (ROM) 630 and random access memory (RAM) 640, which can be used to store various data files used for computer processing and/or communication, as well as possible program instructions executed by the processor group 620. The computer system may also include an input/output assembly 660, which is used to realize input/output data flow between the computer system and other components (e.g., user interface 680, etc.).

Generally, the input/output assembly 660 can be connected to the following devices: an input device such as a touch screen, a touch pad, a keyboard, a mouse, a camera, a microphone, an accelerometer, a gyroscope, etc.; Output devices such as displays (e.g., LCD, OLED displays, etc.), speakers, vibrators, etc.; Including storage devices such as magnetic tapes, hard disks and the like; And a communication interface.

Although Fig. 16 shows a computer system with various devices, it should be understood that the computer system is not required to have all the devices shown, and instead, the computer system may have more or less devices.

The above description is only the preferred embodiment of the present disclosure and the explanation of the applied technical principles. It should be understood by those skilled in the art that the disclosure scope involved in this disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in this disclosure.

For the present disclosure, the following statements should be noted:
(1) The accompanying drawings involve only the structure(s) in connection with the embodiment(s) of the present disclosure, and other structure(s) can be referred to common design(s).
(2) In case of no conflict, the embodiments of the present disclosure and the features in the embodiments can be combined with each other to obtain new embodiments.

What have been described above are only specific implementations of the present disclosure, the protection scope of the present disclosure is not limited thereto, and the protection scope of the present disclosure should be based on the protection scope of the claims.

## Claims

1. A control method for a display screen, comprising:
judging a target attribute satisfied by a target application, wherein the target attribute corresponds to a preset aspect ratio;
obtaining the preset aspect ratio; and
adjusting an aspect ratio of the display screen according to the preset aspect ratio to make a value of the aspect ratio of the display screen reach a target aspect ratio, wherein the aspect ratio of the display screen is a ratio of a size in a transverse direction of a display area of the display screen to a size in a longitudinal direction, and the longitudinal direction intersects with the transverse direction.

2. The control method for the display screen according to claim 1, wherein adjusting the aspect ratio of the display screen according to the preset aspect ratio comprises:
adjusting the aspect ratio of the display screen to the preset aspect ratio, and the target aspect ratio is equal to the preset aspect ratio.

3. The control method for the display screen according to claim 1 or 2, wherein judging the target attribute satisfied by the target application comprises:
judging a device attribute to which the target application has been adapted, wherein the target attribute comprises the device attribute.

4. The control method for the display screen according to claim 3, wherein the device attribute includes a device type, and the control method for the display screen comprises:
judging the device type to which the target application has been adapted, wherein the target attribute includes the device type to which the target application has been adapted; and
obtaining the aspect ratio of the device type that has adapted to the target application as the preset aspect ratio.

5. The control method for the display screen according to claim 4, wherein if the target application has been adapted to a first type of device, the aspect ratio of the display screen is adjusted to a first preset aspect ratio, wherein the first preset aspect ratio is less than or equal to 1;
if the target application has been adapted to a second type of device, the aspect ratio of the display screen is adjusted to a second preset aspect ratio, wherein the second preset aspect ratio is greater than 1.

6. The control method for the display screen according to claim 5, wherein the control method comprises:
if the target application has been adapted to the first type of device, controlling the display screen to elongate and shorten at a first rate to adjust the aspect ratio of the display screen;
if the target application has been adapted to the second type of device, controlling the display screen to elongate and shorten at a second rate different from the first rate to adjust the aspect ratio of the display screen.

7. The control method for the display screen according to claim 6, wherein an elongation and shortening direction of the display screen is the longitudinal direction, and the first speed is greater than the second speed;
the elongation and shortening direction of the display screen is the transverse direction, and the first speed is smaller than the second speed.

8. The control method for the display screen according to claim 3, wherein the device attribute includes a device model, and the control method for the display screen comprises:
judging the device model to which the target application has been adapted, wherein the target attribute includes the device model to which the target application has been adapted; and
obtaining the aspect ratio of the device model that has adapted to the target application as the preset aspect ratio.

9. The control method for the display screen according to any one of claims 4-7, wherein the device attribute further comprises a device model, and the control method for the display screen further comprises:
judging the device model to which the target application has been adapted, wherein the target attribute includes the device model to which the target application has been adapted; and
obtaining the aspect ratio of the device model that has adapted to the target application as the preset aspect ratio.

10. The control method for the display screen according to claim 1 or 2, wherein judging the target attribute satisfied by the target application and the obtaining the preset aspect ratio comprise:
judging whether a target application belongs to an application that has been adapted to the display screen, and if so, taking a default aspect ratio of the display screen that matches with the target application as the preset aspect ratio, wherein the target attribute satisfied by the target application includes being adapted to a current display screen.

11. The control method for the display screen according to claim 1 or 2, wherein the control method for the display screen comprises:
judging a type of the target application, wherein the target attribute includes a type of the target application; and
obtaining an aspect ratio corresponding to a type of the target application as the preset aspect ratio.

12. The control method for the display screen according to claim 11, wherein the type of the target application includes at least one of multimedia application, short video application, navigation application, social application and shopping application.

13. The control method for the display screen according to claim 11 or 12, wherein the control method for the display screen comprises:
obtaining a maximum aspect ratio and a minimum aspect ratio of the display screen, wherein
if the type of the target application is a multimedia application, and the preset aspect ratio is the maximum aspect ratio, the control method for the display screen includes: adjusting the aspect ratio of the display screen to the maximum aspect ratio;
if the type of the target application is a short video application, and the preset aspect ratio is the minimum aspect ratio, the control method for the display screen includes: adjusting the aspect ratio of the display screen to the minimum aspect ratio;
if the type of the target application is a navigation application, and the preset aspect ratio is between the minimum aspect ratio and the maximum aspect ratio, the control method for the display screen comprises following steps: enabling an adjusted aspect ratio of the display screen to be between the minimum aspect ratio and the maximum aspect ratio.

14. The control method for the display screen according to any one of claims 11-13, wherein if the type of the target application is a multimedia application, the control method for the display screen comprises:
judging whether the display screen is extensible in the longitudinal direction,
if so, adjusting the aspect ratio of the display screen to a third preset aspect ratio corresponding to the multimedia application, wherein the third preset aspect ratio is greater than 1,
if not, obtaining a maximum aspect ratio of the display screen, and adjusting the aspect ratio of the display screen to the maximum aspect ratio.

15. The control method for the display screen according to any one of claims 11-13, wherein if the type of the target application is a short video application, the control method comprises:
judging whether the display screen is extensible in the longitudinal direction,
if so, adjusting the aspect ratio of the display screen to a fourth preset aspect ratio corresponding to the short video application, wherein the fourth preset aspect ratio is less than 1,
if not, obtaining a minimum aspect ratio of the display screen, and adjusting the aspect ratio of the display screen to the minimum aspect ratio.

16. The control method for a display screen according to any one of claims 11-13, wherein if the type of the target application is a multimedia application, the control method comprises:
judging a playing history of the multimedia application; and
obtaining an aspect ratio of the multimedia content in the playing history as the preset aspect ratio.

17. The control method for a display screen according to any one of claims 11-13, wherein the control method comprises:
if the type of the target application is a multimedia application, controlling the display screen to elongate and shorten at a first rate to adjust the aspect ratio of the display screen;
if the application type is a short video application, controlling the display screen to elongate and shorten at a second rate to adjust the aspect ratio of the display screen.

18. The control method for the display screen according to claim 17, wherein
an elongation and shortening direction of the display screen is the longitudinal direction, and the second speed is greater than the first speed;
the screen elongation and shortening direction of the display screen is the transverse direction, and the second rate is smaller than the first rate.

19. The control method for the display screen according to claim 1 or 2, wherein the control method comprises:
obtaining an adjustment range of the aspect ratio of the display screen, wherein a range of the aspect ratio of the display screen is a~b (a < b), a is a minimum value of the aspect ratio of the display screen, and b is a maximum value of the aspect ratio of the display screen;
obtaining an aspect ratio to which the target application has adapted and comparing the ratio with the range of the aspect ratio of the display screen;
if the aspect ratio to which the target application has adapted is greater than b, taking b as the preset aspect ratio; if the aspect ratio to which the target application has adapted is less than a, taking a as the preset aspect ratio, and adjusting the aspect ratio of the display screen to a; if the aspect ratio to which the target application has adapted is greater than a and less than b, the aspect ratio to which the target application has adapted is taken as the preset aspect ratio.

20. The control method for a display screen according to any one of claims 1-19, wherein the control method comprises:
after adjusting the aspect ratio of the display screen according to the preset aspect ratio, following steps are executed:
obtaining an aspect ratio of the display image of the target application as a content aspect ratio, and further adjusting the aspect ratio of the display screen to the content aspect ratio.

21. The control method for the display screen according to claim 20, wherein the control method comprises:
obtaining a maximum aspect ratio of the display screen and a minimum aspect ratio of the display screen;
comparing the content aspect ratio with the maximum aspect ratio and the minimum aspect ratio respectively,
if the content aspect ratio is greater than or equal to the maximum aspect ratio of the display screen, adjusting the aspect ratio of the screen to the maximum aspect ratio;
if the content aspect ratio is less than or equal to the minimum aspect ratio of the display screen, adjust the aspect ratio of the screen to the minimum aspect ratio;
if the content aspect ratio is less than the maximum aspect ratio of the display screen and greater than the minimum aspect ratio of the display screen, adjusting the aspect ratio of the display screen to the content aspect ratio.

22. The control method for the display screen according to claim 20, wherein a plurality of elongation and shortening length gradients are set in at least one of the transverse direction and the longitudinal direction, and the display screen is controlled to adjust the transverse size and/or the longitudinal size of the display screen along at least one of the transverse direction and the longitudinal direction according to the elongation and shortening length gradients, to adjust the aspect ratio of the display screen.

23. The control method for a display screen according to any one of claims 1-22, wherein at least one of the transverse size and the longitudinal size of the display screen is adjustable so that the aspect ratio of an image displayed by the display screen is adjustable.

24. The method for controlling a display screen according to any one of claims 1-22, wherein a plurality of sub-display screens are spliced with each other to constitute the display screen, and the sub-display screens are respectively configured to display a corresponding one of the target applications; the control method comprises following steps:
judging whether the target applications displayed by the plurality of sub-display screens are associated with each other,
if the target applications displayed by the sub-display screens are associated with each other, the transverse size and/or longitudinal size of the sub-display screens are synchronously adjusted respectively, to enable the aspect ratio of the display screens spliced by the sub-display screens to be the target aspect ratio;
if the target applications of the plurality of sub-display screens or contents of the target applications displayed respectively are independent of each other, each of the sub-display screens is used as an independent display screen to adjust an aspect ratio of each of the sub-display screens according to the preset aspect ratio of an application used by each of the sub-display screens to enable the value of the aspect ratio of each of the sub-display screens to reach the respective target aspect ratio.

25. The control method for the display screen according to claim 24, wherein the target applications displayed by the sub-display screens are associated with each other, the transverse size and/or longitudinal size of the sub-display screens are synchronously adjusted respectively, to enable the aspect ratio of the display screens spliced by the sub-display screens to be the target aspect ratio, display contents are associated with each other.

26. The control method for the display screen according to claim 24, wherein the transverse sizes and/or the longitudinal sizes of the plurality of sub-display screens are synchronously adjusted respectively, to enable heights in the longitudinal direction of an entirety of the whole display screen are same along the transverse direction.

27. The control method for the display screen according to any one of claims 1-26, wherein the target application is started after adjusting the aspect ratio of the display screen.

28. A control system for a display screen, comprising:
a target attribute judgment module configured to judge a target attribute satisfied by the target application, wherein the target attribute corresponds to a preset aspect ratio;
an aspect ratio acquisition module configured to acquire the preset aspect ratio; and
an aspect ratio adjusting control module and a display screen driving device, wherein the display screen driving device is in signal connection with the aspect ratio adjusting control module, and the aspect ratio adjusting control module is configured to control the display screen to driving device to elongate and shorten in at least one of a transverse direction and a longitudinal direction according to the preset aspect ratio, to adjust an aspect ratio of the display screen so that a value of the aspect ratio of the display screen reaches the target aspect ratio; the aspect ratio of the display screen is a ratio of a size in a transverse direction of a display area of the display screen to a size in a longitudinal direction, and the longitudinal direction intersects with the transverse direction.

29. The control system for the display screen according to claim 28, wherein the control system for the display screen is a vehicle-mounted control system for the display screen, and the display screen is a vehicle-mounted display screen.

30. An electronic device, comprising:
one or more processors; and
a storage apparatus configured to store one or more programs, wherein
when the one or more programs are executed by the one or more processors, the one or more processors realize the control method for the display screen according to any one of claims 1-27.

31. A storage medium comprising computer-executable instructions which, when executed by a computer processor, are used to perform the control method for the display screen according to any one of claims 1-27.
